# EUROPÄISCHE PATENTANMELDUNG

(11) **EP 3 147 562 A2**
(43) Veröffentlichungstag der Anmeldung: **29.03.2017**
(21) Anmeldenummer: 16184473.3
(22) Anmeldetag: 17.08.2016
(51) Int. Cl.: F21V 14/02, F21V 14/04, H01J 61/35, H01K 1/32, F26B 3/30, B01J 19/12, H05B 3/00

(54) **VORRICHTUNG UND VERFAHREN ZUR BESTRAHLUNG EINES SUBSTRATS MIT ULTRAVIOLETTER ODER INFRAROTER STRAHLUNG**

(30) Priorität: 02.09.2015 DE 102015114691
(71) Anmelder: Heraeus Noblelight GmbH, 63450 Hanau (DE)
(72) Erfinder: PRETSCH, Ralf, 63549 Ronneburg (DE); BRIEDEN, Karl-Wilhelm, 63579 Freigericht (DE)
(74) Vertreter: Heraeus IP

(57) **Zusammenfassung**

Bekannte Vorrichtungen zur Bestrahlung eines Substrats 101 mit ultravioletter oder infraroter Strahlung weisen ein Gehäuse auf, in dem eine Bestrahlungslampe mit einem Lampenrohr, und ein Reflektor angeordnet sind. Bei diesen Vorrichtungen legt das Lampenrohr eine Lampenrohr-Längsachse fest, und der Reflektor erstreckt sich in einer Richtung der Lampenrohr-Längsachse. Um hiervon ausgehend eine Bestrahlungsvorrichtung anzugeben, die einfach zu warten ist und eine hohe Lebensdauer aufweist, wird erfindungsgemäß vorgeschlagen, dass der Reflektor 451 auf das Lampenrohr oder ein dieses umgebendes Hüllrohr 450 aufgebracht ist, und dass die Bestrahlungslampe oder das Hüllrohr in dem Gehäuse 103 derart gehaltert ist, dass sie/es um die Lampenrohr-Längsachse relativ zu dem Gehäuse drehbar ist.

## Beschreibung

Die vorliegende Erfindung betrifft eine Vorrichtung zur Bestrahlung eines Substrats mit ultravioletter oder infraroter Strahlung, aufweisend ein Gehäuse, in dem eine Bestrahlungslampe mit einem Lampenrohr, und ein Reflektor angeordnet sind, wobei das Lampenrohr eine Lampenrohr-Längsachse festlegt, und der Reflektor sich in einer Richtung der Lampenrohr-Längsachse erstreckt.

Weiterhin betrifft die vorliegende Erfindung ein Verfahren zur Bestrahlung eines Substrats mit ultravioletter oder infraroter Strahlung, umfassend die Verfahrensschritte:
(a) Betreiben einer in einem Gehäuse angeordneten Bestrahlungslampe mit einem Lampenrohr, wobei die Bestrahlungslampe einen Bestrahlungsbereich festlegt,
(b) kontinuierliches Zuführen des Substrats in den Bestrahlungsbereich,
(c) Bestrahlen des Substrats im Bestrahlungsbereich mit einer Bestrahlungsstärke.

Bestrahlungsvorrichtungen im Sinne der Erfindung sind für die Bestrahlung eines oder mehrerer kontinuierlich zugeführter Substrate ausgelegt; sie weisen eine Bestrahlungslampe auf, die ultraviolette Strahlung oder Infrarotstrahlung emittiert. Derartige Vorrichtungen werden beispielsweise bei der Trocknung von Farben, zur Aushärtung von Klebstoffen oder zu Desinfektionszwecken eingesetzt.

### Stand der Technik

Bekannte Vorrichtungen zur Bestrahlung eines kontinuierlich zugeführten Substrats weisen ein Gehäuse und eine darin angeordnete Bestrahlungslampe auf. Um die von der Bestrahlungslampe emittierte Strahlung auf das zu bestrahlende Substrat ausrichten zu können, sind diese Bestrahlungsvorrichtungen regelmäßig mit einem Reflektor versehen, der die Strahlung auf das zu bestrahlende Substrat lenkt. Die Form des Reflektors ist dabei häufig an die Form des Substrats angepasst. Für langgestreckte Substrate werden meist längliche Reflektoren eingesetzt, die die Strahlung auf eine Bestrahlungslinie fokussieren können.

Eine solche Bestrahlungsvorrichtung ist beispielsweise aus der WO 01/73362 A1 bekannt; sie umfasst eine längliche Gasentladungslampe zum Ausstrahlen von UV-Strahlung, sowie einen länglichen Reflektor aus Aluminium, der sich längs der Gasentladungslampe erstreckt. Der Reflektor fokussiert die von der Gasentladungslampe emittierte Strahlung in Richtung auf ein kontinuierlich zugeführtes Substrat. Durch die Form des Reflektors soll eine homogene Bestrahlung des Substrats mit einer hohen Bestrahlungsstärke ermöglicht werden.

Um bei einer Unterbrechung der kontinuierlichen Substratzuführung eine Beschädigung von bereits der Bestrahlungsvorrichtung zugeführten Substraten zu vermeiden, ist bei der aus der WO 01/73362 A1 bekannten Bestrahlungsvorrichtung ferner ein Shutter vorgesehen, der pneumatisch in den Strahlengang bewegt werden kann und so das Substrat vor weiterer Bestrahlung abschirmt. Hierbei ist vorgesehen, dass gleichzeitig die Lampenleistung reduziert wird.

Um eine möglichst kompakte Vorrichtung zu ermöglichen, wird das Shuttersystem von zwei Teilen des Reflektors gebildet, die drehbar gelagert sind und im Bedarfsfall von einer aufgeklappten "Reflektor-Stellung" in eine "Verschluss-Stellung" gedreht werden können.

Das Shuttersystems ist jedoch mechanisch und konstruktiv aufwendig, erfordert einen gewissen Platzbedarft und muss regelmäßig gewartet werden. Shuttersysteme, bei denen Teile des Reflektors bewegt werden, haben darüber hinaus den Nachteil, dass die Reflektorteile in "Schließ-Stellung" regelmäßig hohen Temperaturen ausgesetzt sind, die dazu führen können, dass sich die Reflektorteile verformen. Verformte Reflektoren zeigen ein verändertes Reflexionsverhalten. Dies hat zur Folge, dass mit derartigen Reflektoren die Strahlung nicht mehr optimal fokussiert werden kann. Derartige Shuttersysteme sind darüber hinaus häufig mit aufwendigen Kühlsystemen versehen, die einem Verziehen der Shutter-Bauteile entgegenwirken sollen.

### Technische Aufgabe

Der Erfindung liegt daher die Aufgabe zugrunde, eine kompakte Bestrahlungsvorrichtung anzugeben, die einfach zu warten ist und eine hohe Lebensdauer aufweist.

Weiterhin liegt der Erfindung die Aufgabe zugrunde, ein einfaches und wartungsarmes Verfahren zur Bestrahlung eines Substrats mit ultravioletter oder infraroter Strahlung anzugeben.

### Allgemeine Beschreibung der Erfindung

Hinsichtlich der Vorrichtung wird die oben genannte Aufgabe ausgehend von einer Vorrichtung der eingangs genannten Gattung erfindungsgemäß dadurch gelöst, dass der Reflektor auf das Lampenrohr aufgebracht ist, und dass die Bestrahlungslampe in dem Gehäuse derart gehaltert ist, dass sie um die Lampenrohr-Längsachse relativ zu dem Gehäuse drehbar ist.

Das Vorsehen eines mechanischen Shuttersystems zur Strahlungsunterbrechung geht mit einem hohen mechanischen Aufwand und den oben genannten Nachteilen hinsichtlich der Wartung des Shuttersystems einher.

Erfindungsgemäß wird daher auf ein Shuttersystem verzichtet. Stattdessen werden gegenüber herkömmlichen Bestrahlungsvorrichtungen die Kombination von zwei Modifikationen vorgeschlagen, von denen eine die Anordnung des Reflektors und die andere die Art der Halterung der Bestrahlungslampe am Gehäuse betrifft.

Der Erfindung liegt die Idee zugrunde, einen Teil der Bestrahlungslampe mit einer Reflektorbeschichtung zu versehen. Ein solcher, auf das Lampenrohr aufgebrachter Reflektor weist einen geringen Raumbedarf auf und trägt so auch zu einer kompakten Bauform der Vorrichtung bei. Darüber hinaus ist ein solcher Reflektor wartungsarm. Vorzugsweise weist der Reflektor eine hohe Temperaturstabilität auf. Temperaturstabile Reflektoren bestehen beispielsweise aus Keramik, Quarzglas oder Gold. Darüber hinaus kann bei einer Wartung der Vorrichtung einfach die Lampe ersetzt werden. Eine spezielle Justierung des Reflektors ist dabei nicht notwendig.

Die bisherige Bewegung des Reflektors in eine "Schließstellung", in der das Substrat mindestens teilweise vor der Strahlung abgeschirmt ist, ist durch eine Rotation der gesamten Bestrahlungslampe ersetzt. Dies hat einerseits den Vorteil, dass nur ein Bauteil bewegt werden muss. Die Bestrahlungslampe einschließlich des darauf aufgebrachten Reflektors weist darüber hinaus ein vergleichsweise geringes Gewicht und eine gleichmäßige Gewichtsverteilung auf. Sie kann daher einfach und reproduzierbar gedreht werden. Darüber hinaus ist aufgrund des geringen Gewichts der Bestrahlungslampe für deren Drehung eine vergleichsweise kleine Antriebseinheit ausreichend. Auch dies trägt zu einer kompakten Bauform der erfindungsgemäßen Vorrichtung bei.

Grundsätzlich ist es ausreichend, wenn nur die Lampe drehbar ist. Eine etwaige Antriebseinheit kann daher sowohl im Gehäuse als auch außerhalb des Gehäuses angeordnet sein. Es hat sich als besonders günstig erwiesen, wenn die Antriebseinheit zur Drehung in einer Aufnahme für die Lampe ausgebildet ist. Dies ermöglicht einen einfachen Lampenwechsel, ohne dass dabei gleichzeitig die Stellung der Antriebseinheit an die Position der Lampe anpasst werden muss.

Die erfindungsgemäße Anordnung hat darüber hinaus den Vorteil, dass bei einer Unterbrechung der Substratzuführung die Bestrahlungsrichtung durch Drehen der Bestrahlungslampe einfach in die entgegengesetzte Richtung gedreht werden kann. Die Bestrahlungslampe bestrahlt dann beispielsweise den Gehäuse-Rückraum. Wird die Substratzuführung fortgesetzt, wird die Lampe in Bestrahlungsposition zurückgedreht. Auf diese Weise ist ein Positionswechsel der Bestrahlungslampe in relativ kurzer Zeit möglich. Wird die Lampe während der Unterbrechung nicht ausgeschaltet, ermöglicht dies eine schnelle Wiederaufnahme des Bestrahlungsvorgangs, denn es muss nicht abgewartet werden, bis die Bestrahlungslampe wieder ihre Betriebstemperatur erreicht.

Es hat sich als vorteilhaft erwiesen, wenn der Reflektor ein diffus streuender Reflektor ist.

Gegenüber spiegelnden Oberflächen haben diffus streuende Reflektoren den Vorteil, dass sie auftreffendes Licht in verschiedene Richtungen reflektieren. Sie erzeugen dabei Streulicht, das insbesondere für eine gleichmäßige Substrat-Bestrahlung geeignet ist, da auftretende Maxima der Bestrahlungsstärke durch den diffus streuenden Reflektor abgeschwächt und Unterschiede in der Bestrahlungsstärke verringert werden.

Vorteilhafterweise ist der Reflektor aus opakem Quarzglas oder aus Keramik gefertigt.

Ein Reflektor aus opakem Quarzglas oder aus Keramik wirkt diffus reflektierend. Bei der Reflexion an einem solchen Reflektor werden nur geringe Strahlungsverluste beobachtet. Er weist eine hohe thermische Stabilität auf und ist darüber hinaus einfach und kostengünstig zu fertigen.

Bei einer bevorzugten Ausgestaltung der erfindungsgemäßen Vorrichtung ist vorgesehen, dass das Lampenrohr eine kreisförmige Querschnittsform mit einem Mittelpunkt aufweist, und dass der Reflektor ein gebogener Reflektorstreifen ist, der einen Kreisbogen des Lampenrohrs mit einem Mittelpunktswinkel im Bereich von 180° bis 340° bedeckt.

Ein solcher Reflektorstreifen trägt zu einer guten Fokussierung der von der Bestrahlungslampe emittierten Strahlung auf einen langgestreckten Bereich bei. Hierbei können durch die Form des Reflektorstreifens insbesondere in Richtung der Reflektorlängserstreckung gleichmäßige Bestrahlungsstärken erzielt werden. Dadurch, dass der Reflektorstreifen einen Kreisbogen des Lampenrohrs mit einem Mittelpunktswinkel im Bereich von 180° bis 340° bedeckt, wird eine gute Fokussierung der emittierten Strahlung erreicht, gleichzeitig können durch diese Reflektor-Form hohe Bestrahlungsstärken erreicht werden. Darüber hinaus kann eine Bestrahlungsvorrichtung mit einem solchen Reflektorstreifen einfach in vorhandene Bestrahlungs-Systeme integriert werden.

Vorzugsweise hat die Bestrahlungslampe eine beleuchtete Vorderseite und eine der beleuchteten Vorderseite gegenüberliegende unbeleuchtete Rückseite. Bedeckt der Reflektor das Lampenrohr in einem Kreisbogen mit einem Mittelpunktswinkel von weniger als 180° weist jede der Lampenrohr-Hälften einen zumindest teilweise beleuchteten Abschnitt auf. Hierdurch wird die Abschattung beim Drehen der Lampe nicht maximal, da auch in "Schließ-Stellung" Strahlungsanteile in Richtung des Bestrahlungsbereichs emittiert werden. Dem könnte durch eine entsprechend dimensionierte Austrittsöffnung entgegengewirkt werden. Ein Reflektorstreifen, der einen Kreisbogen des Lampenrohrs mit einem Mittelpunktswinkel von mehr als 340° bedeckt, lässt nur einen schmalen Spalt für die Bestrahlung offen.

Bei einer weiteren bevorzugten Ausgestaltung der erfindungsgemäßen Vorrichtung ist die Bestrahlungslampe eine UV-Lampe.

Eine Bestrahlungsvorrichtung mit einer UV-Lampe ist insbesondere zur Entkeimung des Substrats einsetzbar. Dabei kann die von der UV-Lampe emittierte ultraviolette Strahlung sowohl unmittelbar auf die zu beseitigenden Mikroorganismen einwirken als auch mittelbar, beispielsweise durch die UV-Strahlung-vermittelte Entstehung von Ozon oder Radikalen.

Bei einer alternativen, ebenso bevorzugten Ausgestaltung der erfindungsgemäßen Vorrichtung ist die Bestrahlungslampe eine Infrarotlampe.

Infrarotlampen können ebenfalls mit einem Reflektor versehen werden, sofern dieser eine ausreichende thermische Stabilität aufweist. Geeignete Reflektorbeschichtungen können beispielsweise aus Gold, Quarzglas oder Keramik bestehen. Eine Vorrichtung mit einem Infrarotstrahler ist insbesondere zur Trocknung von Farben einsetzbar.

Vorzugsweise sind zur elektrischen Kontaktierung der Bestrahlungslampe Gleitkontakte vorgesehen.

Um eine elektrische Kontaktierung der drehbare gelagerten Bestrahlungslampe unabhängig von ihrer Drehposition zu ermöglichen, sind Gleitkontakte - auch Schleifkontakte genannt - vorgesehen. Diese ermöglichen eine elektrische Verbindung bewegter Bauteile. Sie umfassen zwei Bauteile, die bei einer Drehung der Bestrahlungslampe aneinander entlanggeführt werden. Die beiden Bauteile sind aus Materialien unterschiedlicher Härte gefertigt, beispielsweise aus Kupfer und Graphit.

Bei einer alternativen, ebenso bevorzugten Vorrichtung zur Bestrahlung eines in einem Strahlengang angeordneten Substrats mit ultravioletter oder infraroter Strahlung wird die oben genannte Aufgabe ausgehend von einer Vorrichtung der eingangs genannten Gattung erfindungsgemäß dadurch gelöst, dass der Reflektor auf ein das Lampenrohr umgebendes Hüllrohr aus Glas aufgebracht ist, und dass das Hüllrohr in dem Gehäuse derart gehaltert ist, dass es um die Lampenrohr-Längsachse relativ zu dem Gehäuse drehbar ist.

Anstelle einer beschichteten Bestrahlungslampe kann auch ein Hüllrohr vorgesehen sein, dass mit einer Reflektorbeschichtung versehen ist. Das Vorsehen eines Hüllrohres hat den Vorteil, dass darin angeordnete Bestrahlungslampe vor Verunreinigungen geschützt ist, und ein einfacher Lampenwechsel ermöglicht wird. Auf den Einsatz einer mit einer Reflektorbeschichtung versehenen Lampe kann bei dieser Ausführungsform verzichtet werden. Ein solcher, auf das Hüllrohr aufgebrachter Reflektor weist darüber hinaus gegenüber einem verklappbaren, separaten Reflektor nur einen geringen Raumbedarf auf und trägt so auch zu einer kompakten Bauform der Vorrichtung bei.

Die Bewegung des Reflektors in eine "Schließstellung", in der das Substrat vollständig oder teilweise vor der Strahlung abgeschirmt ist, wird durch eine Rotation des Hüllrohrs erreicht. Dies hat einerseits den Vorteil, dass nur ein Bauteil bewegt werden muss. Das Hüllrohr einschließlich des darauf aufgebrachten Reflektors weist darüber hinaus ein vergleichsweise geringes Gewicht und eine gleichmäßige Gewichtsverteilung auf. Es kann daher einfach und reproduzierbar gedreht werden. Darüber hinaus ist aufgrund des geringen Gewichts des Hüllrohrs für dessen Drehung eine vergleichsweise kleine Antriebseinheit ausreichend. Auch dies trägt zu einer kompakten Bauform der erfindungsgemäßen Vorrichtung bei. Die erfindungsgemäße Anordnung hat darüber hinaus den Vorteil, dass bei einer Unterbrechung der Substratzuführung das Hüllrohr einfach in die entgegengesetzte Richtung zur Bestrahlungsrichtung gedreht werden kann, so dass der auf dem Hüllrohr aufgebrachte Reflektor in den Strahlengang gelangt und diesen zumindest teilweise unterbricht. Die Bestrahlungslampe bestrahlt dann beispielsweise den Gehäuse-Rückraum. Wird die Substratzuführung fortgesetzt, wird das Hüllrohr in "Offenstellung" zurückgedreht. Wenn die Lampe während der Unterbrechung nicht ausgeschaltet wird, wird eine schnelle Wiederaufnahme des Bestrahlungsvorgangs ermöglicht, denn es muss nicht abgewartet werden, bis die Bestrahlungslampe wieder ihre Betriebstemperatur erreicht.

Hinsichtlich des Verfahrens wird die oben genannte Aufgabe ausgehend von einem Verfahren der eingangs genannten Gattung erfindungsgemäß dadurch gelöst, dass eine Bestrahlungslampe mit einem auf das Lampenrohr aufgebrachten Reflektor eingesetzt wird, und dass bei einer Unterbrechung der kontinuierlichen Substratzuführung die Lampe relativ zum Gehäuse derart um die Längsachse gedreht wird, dass die Bestrahlungsstärke im Bestrahlungsbereich verringert wird.

Beim erfindungsgemäßen Betriebsverfahren wird auf einen Einsatz eines Shuttersystems verzichtet. Stattdessen wird vorgeschlagen, eine Bestrahlungslampe einzusetzen, auf deren Lampenrohr ein Reflektor aufgebracht ist. Um bei einer Unterbrechung der Substratzuführung eine Beschädigung eines im Bestrahlungsbereich befindlichen Substrats zu vermeiden, ist es bei dem erfindungsgemäßen Verfahren nicht notwendig, die Bestrahlungslampe auszuschalten. Sie wird gemäß der Erfindung nur derart verdreht, dass sie den Bestrahlungsbereich nicht mehr vollständig bestrahlt. Hierdurch sinkt die Bestrahlungsstärke im Bestrahlungsbereich, vorzugsweise bis zur völligen Ausblendung.

Darüber hinaus trägt das erfindungsgemäße Verfahren auch nach Wegfall der Unterbrechung zu einem schnellen Neu-Start des Bestrahlungsvorgangs bei, da insbesondere nicht abgewartet werden muss, bis die Bestrahlungslampe ihre Betriebstemperatur und damit ihre optimale Betriebsleistung erreicht. Zudem entfällt die Wiederzündzeit des Strahlers bei einem etwaigen Ausschalten desselben.

### Ausführungsbeispiel

Nachfolgend wird die Erfindung anhand von Ausführungsbeispielen und drei Figuren näher beschrieben. Im Einzelnen zeigt in schematischer Darstellung:
- **Figur 1**: eine Ausführungsform einer erfindungsgemäßen Bestrahlungsvorrichtung bei unterbrochener Substratzuführung, bei der die Bestrahlungslampe in "Schließ-Stellung" gedreht ist,
- **Figur 2**: die Ausführungsform gemäß Figur 1 bei kontinuierlicher Substratzuführung, bei der die Bestrahlungslampe in "Bestrahlungs-Stellung" gedreht ist,
- **Figur 3**: eine Ausführungsform einer UV-Lampe zum Einsatz in der erfindungsgemäßen Bestrahlungsvorrichtung gemäß Figur 1 in einer Seitenansicht, in einer Draufsicht auf den Sockel der UV-Lampe sowie in einer Schnittdarstellung, und
- **Figur 4**: eine Ausführungsform einer erfindungsgemäßen Bestrahlungsvorrichtung, bei der der Reflektor auf ein Hüllrohr aufgebracht ist.

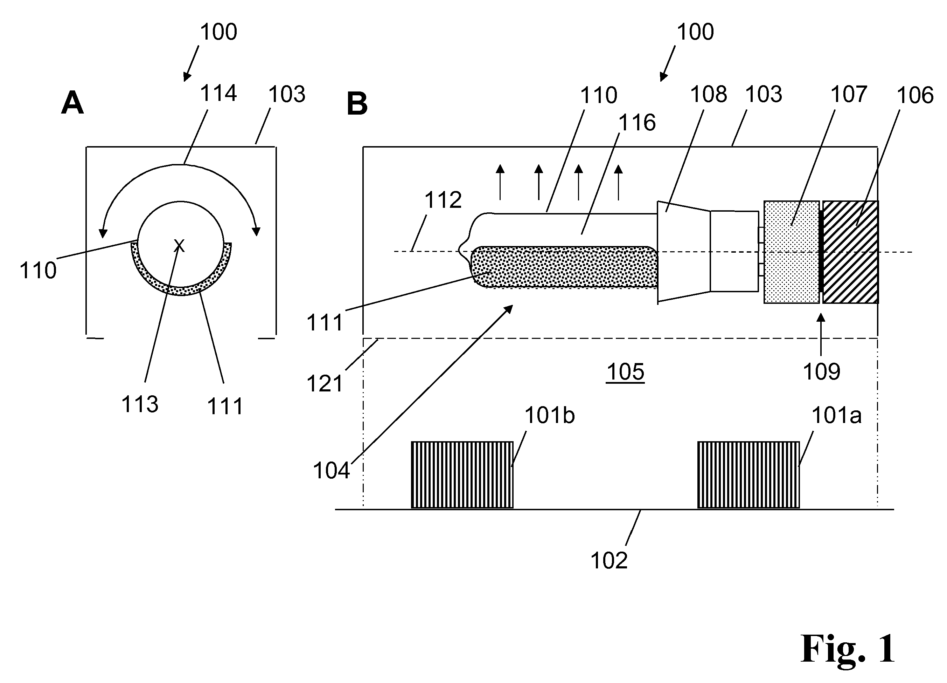

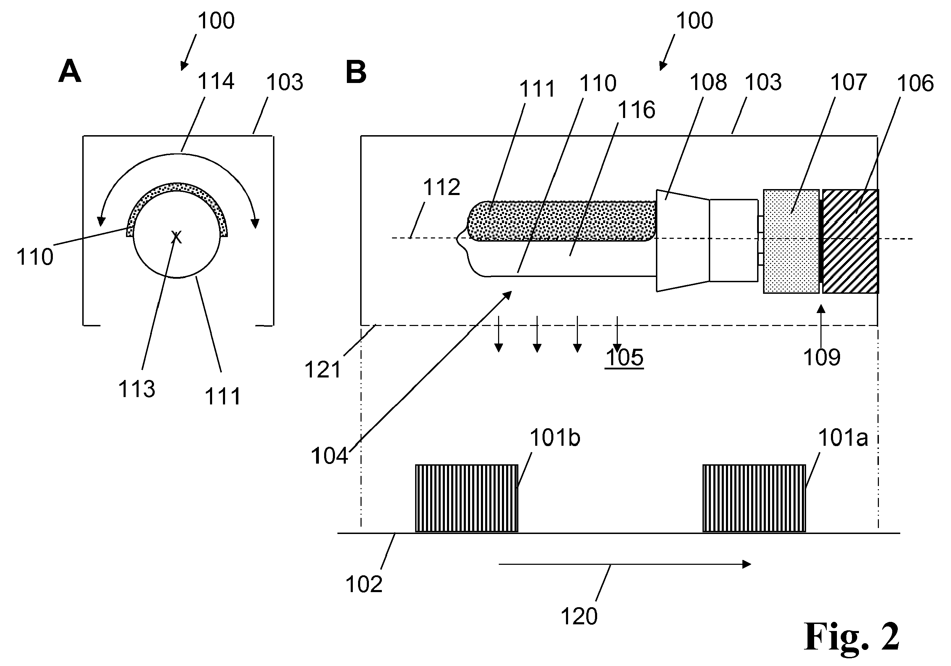

Die **Figuren 1** **und** **2** zeigen in den Abbildungen A und B eine Bestrahlungsvorrichtung, wie sie zur Bestrahlung von Kartonverpackungen für Lebensmittel eingesetzt wird. Abbildung A gibt die Bestrahlungsvorrichtung in einer Querschnittsdarstellung wieder; Abbildung B zeigt die Bestrahlungsvorrichtung in einem Längsschnitt. Der Bestrahlungsvorrichtung ist insgesamt die Bezugsziffer 100 zugeordnet. Die Bestrahlungsvorrichtung 100 ist zur Bestrahlung eines Bestrahlungsbereichs 105 ausgelegt.

Bei verpackten Lebensmitteln werden regelmäßig hohe Anforderungen an ihre mikrobiologische Qualität gestellt. Um diese zu erreichen, werden Lebensmittelverpackungen 101 a, 101 b vor ihrer Befüllung einer keimreduzierenden Behandlung unterzogen.

Das Verfahren zur Entkeimung von Lebensmittelverpackungen 101 a, 101b umfasst folgende Verfahrensschritte:
Zunächst wird mindestens eine Lebensmittelverpackung 101 a, 101 b bereitgestellt. Das Bereitstellen erfolgt vorzugsweise in einem automatisierten Prozess, beispielsweise über ein Förderband 102. Anschließend wird die Lebensmittelverpackung 101 a, 101 b, und zwar insbesondere deren Innenseite, mit einer Wasserstoffperoxid-haltigen Lösung benetzt (nicht dargestellt). Im einfachsten Fall wird hierzu die Wasserstoffperoxid-haltige Lösung über eine Düse (nicht dargestellt) versprüht. Die Wasserstoffperoxid-Konzentration dieser Lösung liegt vorzugsweise im Bereich von 1% bis 5%. Sie beträgt hier 2,5%. Die benetzte Verpackung 101 a, 101 b wird schließlich dem Bestrahlungsbereich 105 der Bestrahlungsvorrichtung 100 zugeführt, beispielsweise über das Förderband 102.

Die Bestrahlungsvorrichtung 100 umfasst ein Gehäuse 103, eine an dem Gehäuse 103 befestigte Antriebseinheit 106 zur Drehung einer Fassung 107. In die Fassung 107 ist der Sockel 108 einer UV-Lampe 104 gesteckt. Zur elektrischen Kontaktierung der UV-Lampe 104 ist zwischen Fassung 107 und Antriebseinheit 106 ein Gleitkontakt 109 vorgesehen. Hierdurch wird eine über die Antriebseinheit 106 vermittelte Drehung der Lampe um 360° in beiden Drehrichtungen gemäß Pfeil 114 ermöglicht.

Die UV-Lampe 104 weist ein zylinderförmiges Lampenrohr 110 mit einer Lampenrohr-Längsachse 112 auf, auf das ein diffus streuender Reflektor 111 aus opakem Quarzglas (QRC^{®}-Beschichtung, Heraeus) aufgebracht ist. Der Reflektor 111 hat die Form eines gebogenen Reflektorstreifens und weist eine Längserstreckung in Richtung der Längsachse 112 auf. Bezogen auf den Mittelpunkt 113 des Lampenrohrs 110 bedeckt der Reflektorstreifen einen Kreisbogen α des Lampenrohrs 110 von 185°.

Durch die Bestrahlung der mit Wasserstoffperoxid-Lösung benetzten Verpackungen 101 a, 101 b mit ultravioletter Strahlung wird eine Keimreduzierung erreicht. Beispielsweise entstehen durch die Bestrahlung der Wasserstoffperoxid-haltigen Lösung freie Radikale, die beispielsweise mit den Zellwänden von Mikroorganismen reagieren können. Andererseits trägt die ultraviolette Strahlung auch durch unmittelbare Einwirkung auf die Mikroorganismen zur Keimreduzierung bei.

**Figur 1** zeigt die Bestrahlungsvorrichtung 100 bei einer Unterbrechung der kontinuierlichen Zuführung der Lebensmittelverpackungen 101 a, 101 b, also bei einem Stillstand des Förderbands 102.

Um zu vermeiden, dass dabei die Lebensmittelverpackungen 101 a, 101 b übermäßig mit ultravioletter Strahlung bestrahlt und hierdurch beschädigt werden, ist die UV-Lampe 104 mit ihrem beleuchteten Abschnitt 116 in Richtung des Inneren des Gehäuses 103 gedreht. Hierdurch wird die Bestrahlungsstärke im Bestrahlungsbereich 105 erheblich verringert.

**Figur 2** hingegen zeigt die Bestrahlungsvorrichtung 100 bei kontinuierlicher Zuführung der Lebensmittelverpackungen 101 a, 101 b. Die Zuführungsrichtung ist durch den Pfeil 120 angedeutet.

Die UV-Lampe 104 mit ihrem beleuchteten Abschnitt 116 zur Austrittsöffnung 121 des Gehäuses 103 gedreht. Die von der UV-Lampe 104 emittierte Strahlung steht somit für eine Bestrahlung des Bestrahlungsbereichs 105 zur Verfügung.

Bei einer alternativen Ausgestaltung der Bestrahlungsvorrichtung (nicht dargestellt) ist anstelle der UV-Lampe 104 eine Infrarotlampe vorgesehen. Die Vorrichtung ist zur Trocknung einer auf das Substrat aufgebrachten Farbschicht ausgelegt.

Die Infrarotlampe weist ein Lampenrohr mit einer Lampenrohr-Länge von 1 m bei einem Lampenrohr-Außendurchmesser von 28 mm auf. Die Lampenrohr-Länge kann bis zu 6 m betragen. In dem Lampenrohr ist eine Heizwendel aus Wolfram angeordnet. Bei einer alternativen Ausführungsform der erfindungsgemäßen Vorrichtung (nicht dargestellt) ist die Heizwendel aus Carbon gefertigt.

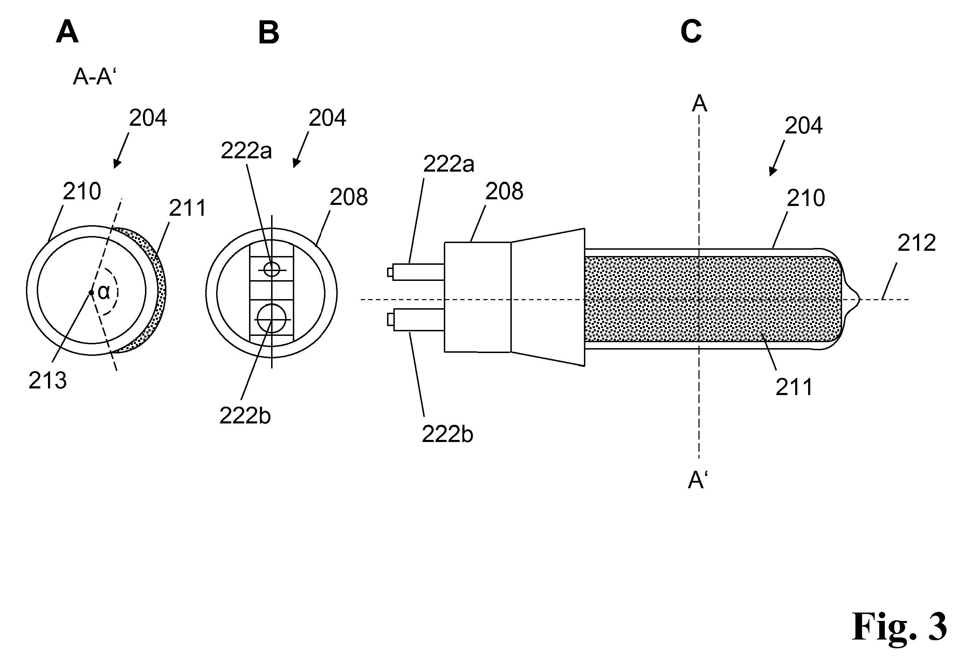

In **Figur 3** ist den Abbildungen A, B und C eine zum Einsatz in der Bestrahlungsvorrichtung gemäß den Figuren 1 und 2 geeignete UV-Lampe 204 dargestellt. Abbildung C zeigt die UV-Lampe 204 in Seitenansicht. In Abbildung A ist eine Querschnittsdarstellung der UV-Lampe 204 entlang der Schnittlinie A-A' wiedergegeben. Figur B zeigt eine Draufsicht auf den Sockel der UV-Lampe 204.

Die UV-Lampe 204 umfasst einen Sockel 208, mit zwei Kontaktstiften 222a, 222b zur elektrischen Kontaktierung der UV-Lampe 204, sowie Lampenrohr 210 aus Quarzglas, und ein auf das Lampenrohr 210 aufgebrachte Reflektor-Beschichtung 211 aus opakem Quarzglas.

Die UV-Lampe 204 zeichnet sich durch eine Lampenrohr-Länge von 215 mm bei einem Lampenrohr-Außendurchmesser von 45 mm. Die Wandstärke des Lampenrohrs beträgt 2 mm. Der Sockeltyp ist GY22. Die UV-Lampe 204 weist eine Nominal-Leistung von etwa 1.000 W auf.

Der Reflektor 211 erstreckt sich in Richtung der Längsachse des Lampenrohrs 210. Er weist eine Längserstreckung von 200 mm auf. Er erstreckt sich über einen Kreisbogenwinkel α des Lampenrohrs 210 von etwa 120°.

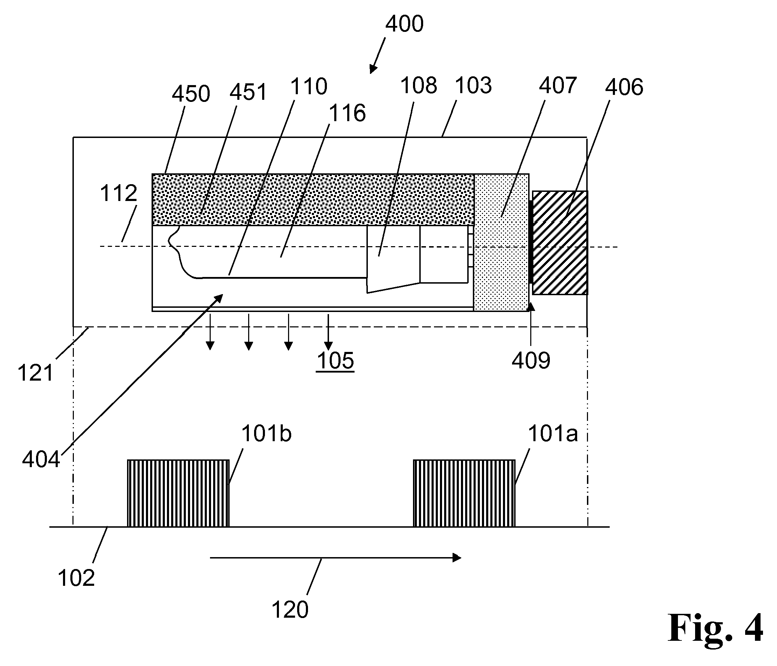

**Figur 4** zeigt im Längsschnitt eine Bestrahlungsvorrichtung 400 in "BestrahlungsStellung". Die Bestrahlungsvorrichtung 400 unterscheidet sich von der Bestrahlungsvorrichtung aus Figur 2 im Wesentlichen darin, dass auf die Bestrahlungslampe 404 kein Reflektor aufgebracht ist. Stattdessen ist ein Hüllrohr 450 vorgesehen, mit einem halbseitig auf die Außenoberfläche aufgebrachten Reflektor 451 aus opakem Quarzglas. Zur Halterung des Hüllrohrs 450 ist eine Aufnahme 407 vorgesehen.

Sofern in Figur 4 dieselben Bezugsziffern wie in Figur 2 verwendet sind, so sind damit baugleiche oder äquivalente Bauteile und Bestandteile bezeichnet, wie sie oben anhand der Beschreibung zu Figur 2 näher erläutert sind.

Die Bestrahlungsvorrichtung 400 umfasst eine an dem Gehäuse 103 befestigte Antriebseinheit 406, die zur Drehung der Aufnahme 407 und des Hüllrohrs 450 geeignet ist. Die Bestrahlungsvorrichtung 400 ist derart ausgelegt, dass bei einer Drehung der Aufnahme 407 die Bestrahlungslampe 404 mitgedreht wird. Hierdurch wird ein konstruktiv einfacher Aufbau der Bestrahlungsvorrichtung ermöglicht. Bei einer anderen, ebenso bevorzugten Ausgestaltung der erfindungsgemäßen Bestrahlungsvorrichtung (nicht dargestellt) wird bei einer Drehung der Aufnahme 407 die Bestrahlungslampe nicht mitgedreht. Dies hat den Vorteil, dass nur eine geringe Masse gedreht werden muss, so dass die Antriebseinheit 406 entsprechend klein gewählt werden kann. Hierdurch wird eine besonders kompakte Bauform der Bestrahlungsvorrichtung ermöglicht.

## Patentansprüche

1. Vorrichtung (100) zur Bestrahlung eines Substrats (101 a; 101 b) mit ultravioletter oder infraroter Strahlung, aufweisend ein Gehäuse (103), in dem eine Bestrahlungslampe (104; 204) mit einem Lampenrohr (110; 210), und ein Reflektor (111; 211) angeordnet sind, wobei das Lampenrohr (110; 210) eine Lampenrohr-Längsachse (112; 212) festlegt, und der Reflektor (111; 211) sich in einer Richtung der Lampenrohr-Längsachse (112; 212) erstreckt, **dadurch gekennzeichnet, dass** der Reflektor (111; 211) auf das Lampenrohr (110; 210) aufgebracht ist, und dass die Bestrahlungslampe (104; 204) in dem Gehäuse (103) derart gehaltert ist, dass sie um die Lampenrohr-Längsachse (112; 212) relativ zu dem Gehäuse (103) drehbar ist.

2. Vorrichtung (100) nach Anspruch 1, **dadurch gekennzeichnet, dass** der Reflektor (111; 211) ein diffus streuender Reflektor ist.

3. Vorrichtung (100) nach Anspruch 1 oder 2, **dadurch gekennzeichnet, dass** der Reflektor (111; 211) aus opakem Quarzglas oder aus Keramik gefertigt ist.

4. Vorrichtung (100) nach einem der vorhergehenden Ansprüche, **dadurch gekennzeichnet, dass** das Lampenrohr (110; 210) eine kreisförmige Querschnittsform mit einem Mittelpunkt (113; 213) aufweist, und dass der Reflektor (111; 211) ein gebogener Reflektorstreifen ist, der einen Kreisbogen des Lampenrohrs (110; 210) mit einem Mittelpunktswinkel α im Bereich von 180° bis 340° bedeckt.

5. Vorrichtung (100) nach einem der vorhergehenden Ansprüche, **dadurch gekennzeichnet, dass** die Bestrahlungslampe (104; 204) eine UV-Lampe ist.

6. Vorrichtung (100) nach einem der vorhergehenden Ansprüche 1 bis 4, **dadurch gekennzeichnet, dass** die Bestrahlungslampe (104; 204) eine Infrarotlampe ist.

7. Vorrichtung (100) nach einem der vorhergehenden Ansprüche, **dadurch gekennzeichnet, dass** zur elektrischen Kontaktierung der Bestrahlungslampe (104; 204) Gleitkontakte vorgesehen sind.

8. Vorrichtung (400) zur Bestrahlung eines Substrats (101a; 101 b) mit ultravioletter oder infraroter Strahlung, aufweisend ein Gehäuse (103), in dem eine Bestrahlungslampe (404) mit einem Lampenrohr (110), und ein Reflektor (451) angeordnet sind, wobei das Lampenrohr (110) eine Lampenrohr-Längsachse (112) festlegt, und der Reflektor (451) sich in einer Richtung der Lampenrohr-Längsachse (112) erstreckt, **dadurch gekennzeichnet, dass** der Reflektor (451) auf ein das Lampenrohr (110) umgebendes Hüllrohr (450) aus Glas aufgebracht ist, und dass das Hüllrohr (450) in dem Gehäuse (103) derart gehaltert ist, dass es um die Lampenrohr-Längsachse (112) relativ zu dem Gehäuse (103) drehbar ist.

9. Verwendung einer Vorrichtung (100) nach einem der vorhergehenden Ansprüche 1 bis 8 zur Trocknung von Farben.

10. Verwendung einer Vorrichtung (100) nach einem der vorhergehenden Ansprüche 1 bis 8 zur Entkeimung des Substrats (101a; 101 b).

11. Verfahren zur Bestrahlung eines Substrats (101a; 101 b) mit ultravioletter oder infraroter Strahlung, umfassend die Verfahrensschritte:
(a) Betreiben einer in einem Gehäuse (103) angeordneten Bestrahlungslampe (104; 204) mit einem Lampenrohr (110; 210), wobei die Bestrahlungslampe (104; 204) einen Bestrahlungsbereich (105) festlegt,
(b) Kontinuierliches Zuführen des Substrats (101a; 101b) in den Bestrahlungsbereich (105),
(c) Bestrahlen des Substrats (101a; 101b) im Bestrahlungsbereich (105) mit einer Bestrahlungsstärke,
**dadurch gekennzeichnet, dass** eine Bestrahlungslampe (104; 204) mit einem auf das Lampenrohr (110; 210) aufgebrachten Reflektor (111; 211) eingesetzt wird, und dass bei einer Unterbrechung der kontinuierlichen Substratzuführung die Bestrahlungslampe (104; 204) relativ zum Gehäuse (103) derart um die Lampenrohr-Längsachse (112; 212) gedreht wird, dass die Bestrahlungsstärke im Bestrahlungsbereich (105) verringert wird.
